# FASCICULE DE BREVET EUROPEEN

(11) **EP 3 612 597 B1**
(45) Date de publication et mention de la délivrance du brevet: **09.06.2021**
(21) Numéro de dépôt: 18722685.7
(22) Date de dépôt: 18.04.2018
(51) Int. Cl.: C08L 95/00

(54) **PRODUITS ASPHALTIQUES AYANT DES PROPRIETES DE MANIABILITE AMELIOREES**
ASPHALTPRODUKTE MIT VERBESSERTER BEARBEITBARKEIT
ASPHALT PRODUCTS HAVING IMPROVED WORKABILITY

(30) Priorité: 18.04.2017 FR 1753363
(43) Date de publication de la demande: 26.02.2020
(73) Titulaire: Eurovia, 92500 Rueil-Malmaison (FR)
(72) Inventeur: LEBARBÉ, Thomas, 33980 Audenge (FR); DELFOSSE, Frédéric, 33600 Pessac (FR); DECAMPS, Jacques-Antoine, 33700 Merignac (FR); GIANETTI, Thomas, 33200 Bordeaux (FR); RAS, Sophie, 33700 Merignac (FR)
(74) Mandataire: Regimbeau
(86) Numéro de dépôt international: PCT/FR2018/050969
(87) Numéro de publication internationale: WO 2018/193207

(56) Documents cités:
- EP-A1- 0 937 750
- EP-A1- 2 062 941
- EP-A2- 1 698 669

## Description

La présente invention concerne des produits asphaltiques ayant des propriétés de maniabilité satisfaisantes. Le produit asphaltique peut être à base de bitume non naphténique, tel que du bitume paraffinique. Dans une autre variante, le produit asphaltique peut être à base de bitume naphténique.

Par « produit asphaltique », dans la présente invention, on entend un mélange coulable à chaud de liant hydrocarboné de type bitumineux avec une charge minérale. En particulier, un produit asphaltique comprend 1) un mastic à base de liant bitumineux et de charge minérale et 2) des granulats, y compris du sable.

Le mastic d'asphalte comprend un liant bitumineux et des fines, on parle alors d'asphalte synthétique, ou de la poudre d'asphalte et on parle alors d'asphalte naturel.

Les fines peuvent avantageusement provenir de roche naturelle broyée, telle qu'une roche calcaire ou siliceuse, de poudre de roche d'asphalte naturel ou de la récupération de poussières de filtration. Les fines passent au tamis de 0,063 mm. Dans le cadre de la présente invention, les fines sont avantageusement d'origine calcaire.

Dans un produit asphaltique, les matières minérales sont mélangées de manière à ne laisser que peu de vide. Dans un asphalte coulé routier, le volume des fines et de liant bitumineux est supérieur au volume des vides restant dans le mélange de granulats et de bitume. La teneur et la consistance du liant doivent être déterminées en fonction des vides entre les matières premières minérales, de façon à ce que, une fois le produit asphaltique posé, tous les vides soient comblés et qu'il n'y ait qu'un léger excédent de liant bitumineux.

Le produit asphaltique peut être coulé et étalé à chaud et il est d'une grande compacité après refroidissement. A la différence de l'enrobé bitumineux classique, il n'est pas nécessaire de compacter l'asphalte coulé au rouleau lors de sa mise en place.

Le produit asphaltique doit à la fois offrir une bonne stabilité (comportement de déformation) et être facile à travailler. L'avantage du produit asphaltique étant précisément de ne pas nécessiter de compactage lors de la mise en place, il doit être facile à couler et à étaler.

Les asphaltes sont codifiés dans le fascicule 10 du Cahier des Charges de l'Office des Asphaltes (2012) et les spécifications des matériaux sont décrites dans la norme NF EN 13108-6 (décembre 2006).

La préparation d'un produit asphaltique (tel que l'asphalte coulé) comprend le mélange du liant et des charges à une température, appelée température de fabrication, puis le coulage de ce mélange à une température de mise en œuvre, suivi d'un refroidissement. Des températures élevées de fabrication et de mise en œuvre représentent une forte dépense d'énergie et simultanément une pollution environnementale due aux effluents gazeux indésirables

On cherche donc constamment à améliorer la maniabilité du liant bitumineux afin d'abaisser la température de fabrication, de transport, en conservant les mêmes propriétés mécaniques. On cherche également à diminuer l'impact des variations de formules en chantier où la qualité de la charge peut varier ainsi que le ratio massique réel liant bitumineux / charges.

On distingue deux grandes catégories de bitumes : les bitumes naphténiques et les bitumes paraffiniques.

Les bitumes naphténiques présentent les spécificités suivantes : acidité naturelle (plus avantageusement 3 à 5 mg KOH/g de bitume), présence de dinaphtène, d'acides napthéniques, traces de Ni et Vd. La structure chimique des acides napthéniques n'est pas connue précisément mais il semblerait que ces molécules aient des propriétés pseudo-tensioactives contribuant aux propriétés spécifiques des bitumes naphténiques.

Les bitumes paraffiniques, ou bitumes « traditionnels », sont moins chers que les bitumes naphténiques. Ils ont une acidité très faible (0,1 à 0,2 mg KOH/g de bitume), et il est considéré qu'ils ne comprennent pas de molécules ayant des propriétés pseudo-tensioactives.

Pour des produits asphaltiques, les bitumes naphténiques permettent d'obtenir une meilleure maniabilité et une meilleure dispersion de la charge (cf exemple 1) qu'avec les bitumes paraffiniques.

Cependant, l'emploi d'un seul type de bitume pour une application donnée n'est pas souhaité, pour des raisons à la fois techniques, logistiques et économiques. On cherche donc en outre à diversifier les sources de liant bitumineux et idéalement à pouvoir utiliser des liants bitumineux de toute origine.

Pour se rapprocher du comportement d'un bitume naphténique, on a déjà proposé de doper le bitume paraffinique avec des acides gras, tels que l'acide oléique, l'acide stéarique, les dimères d'acides gras:
Récemment, la société Ingevity a proposé un nouvel additif permettant, pour un asphalte coulé, de retrouver les propriétés des bitumes naphténiques à partir de bitumes paraffiniques (RGRA N°940, octobre-novembre 2016, pages 22-25).

L'invention a pour objet un produit asphaltique comprenant un liant hydrocarboné bitumineux ou de synthèse et au moins une charge minérale, caractérisé en ce qu'il comprend également 0,02 à 5 % en poids, par rapport au poids dudit liant hydrocarboné, d'un polymère thermoplastique compatible avec le liant hydrocarboné, ledit polymère étant choisi parmi :
- un polymère ayant au moins une terminaison acide carboxylique, le polymère étant un polyester, un polyamide, un poly(ester-amide), un polyéther fonctionnalisé en bout de chaîne acide carboxylique, ou un polydiène fonctionnalisé en bout de chaîne acide carboxylique lorsque ledit polymère thermoplastique comprend plus d'une fonction acide carboxylique, au moins 20 atomes de carbone séparent ces fonctions acide carboxylique ;
- un polymère ayant au moins une fonction phosphate ou phosphonate ;
- et leurs mélanges.

### Liant hydrocarboné :

Dans le cadre de l'invention, on utilisera un liant conforme aux spécifications pour un asphalte coulé, en particulier conforme au fascicule 10 du Cahier des Charges de l'Office des Asphaltes (2012)).

En accord avec ce fascicule, on entend par « liant » une matière dont les propriétés thermoplastiques lui permettent de durcir lors du refroidissement et de lier les granulats entre eux. Le liant comprend en général du bitume et éventuellement des adjuvants, le bitume pouvant être remplacé par un liant de synthèse.

Dans un mode de réalisation, l'invention s'intéresse plus particulièrement à un liant bitumineux non naphténique, en particulier les liants bitumineux paraffiniques ou les liants de synthèse, plus particulièrement les liants bitumineux paraffiniques.

Le liant bitumineux naturel paraffinique ou de synthèse a, par définition, un indice d'acide compris entre 0 et 2 mg KOH/g de bitume, avantageusement inférieur à 1 mg KOH/g de bitume. L'indice d'acide d'un tel liant peut être nul.

Dans un autre mode de réalisation, l'invention s'intéresse plus particulièrement à un liant bitumineux naphténique.

Le liant bitumineux naturel napthénique a, par définition, un indice d'acide supérieur à 2 mg KOH/g de bitume, avantageusement supérieur à 3 mg KOH/g de bitume, plus avantageusement compris entre 3 et 5 mg KOH/g de bitume.

Les bitumes naphténiques se caractérisent également par la présence de dinaphtène, d'acides napthéniques, traces de Ni et Vd.

Dans l'un ou l'autre de ces modes de réalisation :
Avantageusement le liant a une pénétrabilité, mesurée selon la norme EN1426 (juin 2007) allant de 20 à 220 1/10 mm à 25°C.

Le liant peut comprendre des additifs couramment utilisés dans le domaine des asphaltes coulés tels que des polymères, des fibres, des pigments.

Le liant constitue avantageusement 5 à 12% en poids du poids du produit asphaltique, encore plus avantageusement 7 à 9% en poids du poids du produit asphaltique.

### Granulats :

Par "granulats", on entend ici tous granulats utilisables pour la réalisation de produits asphaltiques, en particulier d'asphalte coulé, notamment pour la construction routière, tels que par exemple définis dans la norme NF EN 13043 du 01/08/2003 et XP P18-545 (février 2004), allant des fines aux gravillons. Les granulats utilisables pour la réalisation de produits asphaltiques comprennent notamment les granulats minéraux naturels issus de carrière ou de gravière, les produits de recyclage résultant notamment du recyclage des matériaux récupérés lors de la réfection des routes, y compris les agrégats d'enrobés, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, ainsi que leurs mélanges en toutes proportions.

On entend par « agrégats d'enrobés » des enrobés (mélange de granulats et de liants bitumineux) provenant de fraisage de couches d'enrobé, de concassage de plaques extraites de chaussées en enrobés, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage seront concassés et/ou tamisés pour ne pas excéder un diamètre adapté au coulis asphaltique fini.

Parmi les granulats, on distingue les fines, les charges, le sable et les gravillons.

Par fines, on entend toutes fines passant au tamis de 0,063 mm dans le mélange asphaltique considérées comme fines d'apport ou fines de récupération. Les fines d'apport peuvent être issues de roches massives : le filler calcaire est utilisé majoritairement. On rencontre aussi également d'autres matériaux tels que le ciment, la chaux vive, le filler activé (mélange de fines calcaires et de chaux éteinte), la chaux éteinte, les cendres volantes, les fillers de cimenterie, les ardoises et les fillers siliceux.

Par charge, on entend les granulats retenus au tamis de 0,063 mm et passant généralement au tamis de 2 mm. Les charges sont le plus souvent obtenues par broyage d'une roche calcaire. Avantageusement, la teneur en carbonate de calcium est supérieure à 80% en masse, par rapport au poids total de la charge.

Par sable, on entend les granulats retenus au tamis de 0,063 mm et passant au tamis de 4 mm. Le sable peut être minéral et issus de roches calcaires ou siliceuses.

Les gravillons ont des dimensions supérieures à 2 mm. Avantageusement, les gravillons ont des dimensions inférieures à 10 mm. Les gravillons peuvent être minéraux et issus de roches calcaires ou siliceuses. On peut avantageusement utiliser des coupures d/D 2/4 ou 2/6, avec d et D étant respectivement les dimensions inférieure (d) et supérieure (D) de tamis.

Pour un asphalte routier, les gravillons peuvent avoir des dimensions allant jusqu'à D = 22 mm

La taille des granulats minéraux est mesurée par les essais décrits dans la norme NF EN 933-1 (version mai 2012).

Les granulats constituent avantageusement 70 à 94% en poids du poids du produit asphaltique. Les fines constituent avantageusement au moins 20% en poids du poids du produit asphaltique.

### Additif selon l'invention

L'invention se caractérise en ce que le produit asphaltique comprend un polymère thermoplastique compatible avec le liant hydrocarboné ayant au moins une terminaison acide carboxylique et/ou un polymère thermoplastique compatible avec le liant hydrocarboné ayant au moins une fonction phosphate ou phosphonate. Par le terme « polymère », on entend également désigner les oligomères.

Cet additif permet d'améliorer la maniabilité de l'asphalte, que celui-ci comprenne un liant bitumineux napthénique ou paraffinique ou de synthèse.

En particulier avec un liant bitumineux paraffinique ou un liant de synthèse, on peut atteindre les performances qui seraient obtenues avec un liant bitumineux napthénique, à une même température d'application.

En particulier avec un liant bitumineux paraffinique ou napthénique, on peut diminuer la température de mise en œuvre de l'asphalte tout en conservant une maniabilité suffisante.

Pour un même type de bitume, en particulier un liant bitumineux paraffinique ou naphténique, on peut améliorer la maniabilité et ainsi diminuer la température de fabrication et de mise en œuvre.

En outre, le ratio massique liant bitumineux / charge peut être diminué. Ainsi, sur chantier, la mise en œuvre de l'asphalte coulé sera moins sensible aux variations de formules.

Sans être lié par cette théorie, les inventeurs pensent que l'additif permet d'améliorer la dispersion de la charge dans le liant hydrocarboné.

Cet additif est compatible avec le liant hydrocarboné, ayant ainsi une bonne affinité avec le liant hydrocarboné. En particulier, il est soluble dans le bitume. L'affinité de l'additif avec le liant hydrocarboné peut être vérifiée en utilisant le test de stabilité au stockage décrit dans la norme NF EN 13399 (août 2000).

Le produit asphaltique selon l'invention comprend 0,02 à 5% en poids, par rapport au poids du liant, dudit additif. En particulier, le produit asphaltique selon l'invention comprend 0,1 à 2% en poids, avantageusement 0,2 à 1,5 % en poids, plus avantageusement 0,2 à 1,2% ou 0,2 à 1% en poids, par rapport au poids du liant, dudit additif.

Dans un premier mode de réalisation, cet additif comprend une terminaison acide carboxylique (-COOH) permettant ainsi une interaction chimique avec la charge, en particulier avec le carbonate de calcium.

La ou les fonctions acide carboxylique peuvent être toutes totalement acide, ou totalement ou partiellement neutralisée par tout agent de neutralisation. A titre d'exemple d'agent de neutralisation, on peut citer les hydroxydes de sodium, de potassium, les hydroxydes et/ou oxydes de calcium, de magnésium, l'ammoniaque, ou leurs mélanges.

L'additif selon l'invention est un polymère, c'est-à-dire qu'il comprend plusieurs unités de répétition. Par « plusieurs », on entend « au moins deux », avantageusement « au moins trois ». Ce polymère comprend au moins une fonction acide carboxylique terminale. Lorsque le polymère comprend plus d'une fonction acide carboxylique, au moins 20 atomes de carbone séparent ces fonctions acide carboxylique.

Ce polymère est thermoplastique, avantageusement linéaire.

Le polymère thermoplastique a avantageusement une masse moléculaire en poids d'au moins 500 g/mol, plus avantageusement de 500 g/mol à 200 000 g/mol.

Le polymère thermoplastique a avantageusement un indice d'acide inférieur à 100 mgKOH/g, plus avantageusement inférieur à 50 mgKOH/g. L'indice d'acide est la masse d'hydroxyde de potassium (exprimé en mg) nécessaire pour neutraliser les acides gras libres contenus dans un gramme de polymère, additif de l'invention.

Selon l'invention, le polymère est un polyester, un polyamide, un poly(ester-amide), un polyéther fonctionnalisé en bout de chaîne acide carboxylique ou un polydiène fonctionnalisé en bout de chaîne acide carboxylique.

Dans une première variante de l'invention, le polymère thermoplastique est un polyester, un polyamide ou un poly(ester-amide). Ainsi, en fonction de sa nature, le polymère comprendra une ou deux fonctions acide carboxylique terminales.

Le polyester peut être synthétisé par différentes méthodes connues de l'homme de l'art.

Dans un mode de réalisation de la première variante, le polyester est obtenu par polymérisation d'au moins un hydroxyacide de formule (I) :

HO-C(O)-R-CR'(OH)-R" (I)

Où
R est une chaîne hydrocarbonée, aliphatique, en C8-C20, saturée ou insaturée, éventuellement ramifiée, comprenant éventuellement un ou des atomes d'oxygène, comprenant une chaine principale linéaire d'au moins 8 atomes de carbone
R', R" représentent chacun, indépendamment l'un de l'autre, H ou une chaîne hydrocarbonée, aliphatique, en C1-C10

Avantageusement, R répond à l'une ou plusieurs des caractéristiques suivantes, avantageusement à l'ensemble des caractéristiques suivantes :
- R est une chaîne hydrocarbonée linéaire ;
- R est une chaîne hydrocarbonée qui peut être saturée ou insaturée. L'insaturation, lorsqu'elle est présente, est avantageusement une double liaison C=C ou une triple liaison C=C, plus avantageusement une double liaison C=C. Dans un mode de réalisation, R est une chaîne hydrocarbonée qui comprend 0 à 3 doubles liaisons C=C, avantageusement 0 à 2 doubles liaisons C=C, plus avantageusement 0 ou 1 double liaison C=C ;
- R est une chaîne hydrocarbonée en C8-C15, plus avantageusement en C10-C15.

En outre, R peut comprendre un ou plusieurs atomes d'oxygène soit interrompant la chaîne (fonctions éther) soit pendant sous la forme de fonctions hydroxyle ou éther en C1-C6.

Avantageusement, R' représente H ou une chaîne hydrocarbonée, aliphatique, linéaire, saturée, plus avantageusement en C1-C4. Plus avantageusement, R' représente H.

Avantageusement, R" représente une chaîne hydrocarbonée, aliphatique, linéaire, saturée ou insaturée. L'insaturation, lorsqu'elle est présente, est avantageusement une double liaison C=C ou une triple liaison C=C, plus avantageusement une double liaison C=C. Dans un mode de réalisation, R" est une chaîne hydrocarbonée qui comprend 0 ou 1 double liaison C=C. Avantageusement, R" est une chaîne en C4-C8. R" peut comprendre un ou plusieurs atomes d'oxygène soit interrompant la chaîne (fonctions éther) soit pendant sous la forme de fonctions hydroxyle ou éther en C1-C6.

On peut homopolymériser un hydroxyacide de formule (I) ou copolymériser plusieurs hydroxyacides de formule (I).

En outre, la réaction de polymérisation peut être conduite en présence d'acides gras non hydroxylés, en particulier des acides gras saturés ou insaturés oléfiniques comprenant de 8 à 30 atomes de carbone, éventuellement substitués par un radical alkyle en C1-C4. On peut par exemple citer l'acide oléique, l'acide palmitique, l'acide stéarique, l'acide linoléique, l'acide 2-ethylhexanoique, ...

L'hydroxyacide de formule (I) à polymériser peut comprendre jusqu'à 20% en poids, tel que de 10 à 15% en poids, par rapport au poids de l'hydoxyacide, de tels acides gras non hydroxylés.

Le polyester ainsi obtenu peut répondre à la formule suivante (II) :

HO-C(O)-R-CR'R"O-[C(O)-R-CR'R"O-]ₙC(O)-R-CR'R"R'" (II)

Où
n varie avantageusement de 0 à 5
R'" représente OH ou H ou un radical alkyle en C1-C4
R, R', R" sont tels que définis précédemment et peuvent varier d'une unité répétitive à l'autre en cas de copolymérisation de plusieurs hydroxyacides de formule (I).

On peut également copolymériser au moins un hydroxyacide de formule (I), éventuellement en présence d'acides gras non hydroxylés, avec un diacide carboxylique. Avantageusement, le diacide carboxylique est de formule (III) :

HO-C(O)-R2-C(O)-OH (III)

Où
R2 est une chaîne hydrocarbonée aliphatique en C1-C60, saturée ou insaturée, éventuellement ramifiée, comprenant éventuellement un ou des atomes d'oxygène, ou un groupement aromatique.

Avantageusement, R2 répond à l'une ou plusieurs des caractéristiques suivantes, avantageusement à l'ensemble des caractéristiques suivantes :
- R2 est une chaîne aliphatique
- R2 est une chaîne hydrocarbonée linéaire ;
- R2 est une chaîne hydrocarbonée qui peut être saturée ou insaturée. L'insaturation, lorsqu'elle est présente, est avantageusement une double liaison C=C ou une triple liaison C=C, plus avantageusement une double liaison C=C. Dans un mode de réalisation, R est une chaîne hydrocarbonée qui comprend 0 à 3 doubles liaisons C=C, avantageusement 0 à 2 doubles liaisons C=C, plus avantageusement 0 ou 1 double liaison C=C ;

En outre, R2 peut comprendre un ou plusieurs atomes d'oxygène soit interrompant la chaîne (fonctions éther) soit pendant sous la forme de fonctions hydroxyle ou éther en C1-C6.

Dans un mode de réalisation, R2 est une chaîne hydrocarbonée en C6-C50, plus avantageusement en C10-C40. Dans un mode de réalisation, R2 est une chaîne hydrocarbonée en C1-C10, plus avantageusement en C1-C6.

R2 peut également être un groupement aromatique, en particulier un benzyle ou un napthyle. Le noyau aromatique peut être substitué ou non, les substituants possibles étant une fonction hydroxyle ou par un radical alkyle en C1-C4.

Le polyester ainsi obtenu peut répondre à la formule suivante (IV) :

HO-C(O)-R-CR'R"O-[C(O)-R-CR'R"O-]ₙC(O)-R2-C(O)-[OCR'R"-R-C(O)-]ₘOCR'R"-R-COOH (IV)

Où
n varie avantageusement de 0 à 5
m varie avantageusement de 0 à
R, R', R", R2 sont tels que définis précédemment et peuvent varier d'une unité répétitive à l'autre en cas de copolymérisation de plusieurs hydroxyacides de formule (I).

Dans un autre mode de réalisation de la première variante, le polyester peut être obtenu par copolymérisation d'au moins un diacide carboxylique et d'au moins un diol. Il est entendu que l'on peut copolymériser un ou plusieurs diacides carboxyliques avec un ou plusieurs diols.

Avantageusement le diacide carboxylique est un diacide en C3-C20, plus avantageusement en C4-C16, encore plus avantageusement en C4-C12. Le diacide est avantageusement aliphatique, avantageusement linéaire ou ramifié. Le diacide peut comprendre une ou plusieurs insaturations, en particulier oléfinique.

Le diacide carboxylique est avantageusement l'acide sébacique, l'acide azélaique, l'acide adipique, l'acide glutarique, l'acide succinique, l'acide maléique, l'acide itaconique, et leurs mélanges.

Avantageusement le diol est un diol comprenant au moins trois atomes de carbone. Le diol peut en particulier être un alkyle diol, avantageusement en C3-C20, le terme alkyle englobant les alcènes et les alcynes, ou un polymère hydroxytéléchélique. Avantageusement, le diol est un alkyle diol insaturé en C3-C20, tel que par exemple le dodecanediol, le decanediol, l'hexane diol, le butanediol, ou le propanediol. Avantageusement le diol est un polymère hydroxytéléchélique, le polymère étant choisi parmi les polydiènes ou les polyethers, tel que par exemple les polybutadiènes hydroxytéléchéliques, les polytetrahydrofurane hydroxytéléchéliques, ou les polypropylene glycol hydroxytéléchéliques. On peut également utiliser un mélange de tels diols. Avantageusement, le diol est choisi parmi le dodecanediol, le decanediol, l'hexane diol, le butanediol, le propanediol, les polybutadiènes hydroxytéléchéliques, les polytetrahydrofurane hydroxytéléchéliques, les polypropylene glycol hydroxytéléchéliques et leurs mélanges.

Le polyester peut également être obtenu par polymérisation par ouverture de cycle d'une lactone et être fonctionnalisé acide carboxylique terminal par condensation avec un polyacide, par exemple un diacide, en excès, ou par ouverture de cycle d'une lactone, d'un lactide ou d'un anhydride cyclique. L'anhydride cyclique peut comprendre de 4 à 10 atomes de carbone cycliques.

Avantageusement, le polymère est choisi parmi le poly(acide ricinoléique) ou le poly(acide 12-hydroxystéarique).

Le polymère peut également être un polyamide. Un tel polyamide peut être obtenu par polymérisation d'au moins un diacide carboxylique et d'au moins une diamine. Il est entendu que l'on peut copolymériser un ou plusieurs diacides carboxyliques avec une ou plusieurs aminés.

Avantageusement le diacide carboxylique est tel que défini précédemment pour le polyester.

Avantageusement la diamine est une alkyle diamine, le terme alkyle englobant les alcènes et les alcynes, plus avantageusement en C4-C20. A titre d'exemple, on peut notamment citer la tétraméthylène diamine, l'hexaméthylène diamine, ou la décanediamine.

Des polyamides peuvent également être préparés par polymérisation par ouverture de cycle de lactames, en particulier de lactames comprenant au moins 5 atomes de carbone.

Des polyester-amide peuvent être obtenus par copolymérisation d'au moins un diacide carboxylique, d'au moins un diol et d'au moins une amine. Le diacide carboxylique, le diol et la diamine sont avantageusement tel que définis précédemment.

Des polyester-amide peuvent être obtenus par copolymérisation d'au moins un diacide carboxylique, d'au moins un diol et d'au moins un lactame. Les monomères sont tels que décrits précédemment.

Dans une deuxième variante de l'invention, le polymère thermoplastique est polyéther fonctionnalisé en bout de chaîne acide carboxylique ou un polydiène fonctionnalisé en bout de chaîne acide carboxylique. Ainsi, la fonction acide carboxylique est introduite par modification d'un polymère.

Le polydiène est avantageusement le polybutadiène ou le polyisoprène ainsi que les copolymères d'isoprène-butadiène.

Le polyéther est avantageusement le polytétrahydrofurane ou le polypropylene glycol.

Le polymère peut être fonctionnalisé acide carboxylique en position terminale par toute méthode connue de l'homme du métier.

En particulier, le polymère peut être est obtenu par condensation d'un polyéther mono ou dihydroxytéléchélique et d'un polyacide, par exemple un diacide, en excès, ou par ouverture de cycle d'une lactone, d'un lactide ou d'un anhydride cyclique avec un polyéther mono ou dihydroxytéléchélique.

En particulier, le polymère peut être est obtenu par condensation d'un polydiène mono ou dihydroxytéléchélique et d'un diacide en excès, ou par ouverture de cycle d'une lactone, d'un lactide ou d'un anhydride cyclique avec un polydiène mono ou dihydroxytéléchélique.

Le diacide peut être un diacide carboxylique tel que défini précédemment.

L'anhydride cyclique peut comprendre de 4 à 10 atomes de carbone cycliques.

Dans un deuxième mode de réalisation de l'invention, le polymère est un polymère thermoplastique comprenant au moins une fonction phosphate ou une fonction phosphonate.

Dans ce deuxième mode de réalisation, ladditif comprend une terminaison acide phosphate (-O-P(O)(OH)₂) ou phosphonate (-P(O)(OH)₂) permettant ainsi une interaction chimique avec la charge, en particulier avec le carbonate de calcium

Avantageusement, le polymère est de type ester-phosphate. Il peut être obtenu par réaction de tout type de polymère comprenant des fonctions hydroxyle pendantes avec l'acide phosphorique ou l'acide polyphosphorique.

L'additif selon l'invention est un polymère, c'est-à-dire qu'il comprend plusieurs unités de répétition. Par « plusieurs », on entend « au moins deux », avantageusement « au moins trois ».

Le polymère thermoplastique a avantageusement une masse moléculaire en poids d'au moins 500 g/mol, plus avantageusement de 500 g/mol à 200 000 g/mol.

Les composés mentionnés dans la description et les polymères peuvent être d'origine fossile ou biosourcés. Dans ce dernier cas, ils peuvent être, partiellement ou totalement, issus de la biomasse ou obtenus à partir de matières premières renouvelables issues de la biomasse.

### Autres additifs de maniabilité

Le produit asphaltique peut également comprendre d'autres additifs de maniabilité.

Cet autre additif de maniabilité peut être un additif présentant une température de fusion supérieure à 60 °C et inférieure à 130°C. Un tel additif présente une température de fusion supérieure à 60 °C, avantageusement supérieure à 80°C. Un tel additif a une température de fusion inférieure à 130°C, avantageusement inférieure à 120°C.

En particulier, un tel autre additif est au moins un triglycéride d'acides gras, ledit acide gras étant choisi dans le groupe constitué par les acides gras saturés, comprenant de 12 à 30 atomes de carbone, avantageusement de 12 à 20 atomes de carbone, et pouvant être substitués par au moins une fonction hydroxyle ou par un radical alkyle en C₁-C₄. Un acide gras saturé ne comporte pas d'insaturations (double ou triple liaison carbone carbone). En particulier, l'acide gras est choisi dans le groupe constitué par les acides gras saturés comprenant de 12 à 30 atomes de carbone, éventuellement substitués par au moins une fonction hydroxyle ou par un radical alkyle en C₁-C₄, en particulier l'acide gras est choisi dans le groupe constitué par l'acide 12-hydroxy-octadécanoïque, l'acide hexadécanoïque, l'acide octadécanoïque, l'acide 9,10-dihydroxy- octadécanoïque, l'acide icosanoïque, l'acide nonadécanoïque, et leurs mélanges.

L'autre additif de maniabilité est avantageusement un triglycéride d'acides gras, l'acide gras étant avantageusement choisi dans le groupe défini précédemment. En particulier, l'additif comprend au moins un triglycéride dont une molécule d'acide gras est constituée de l'acide 12-hydroxy-octadécanoïque. Un tel additif est par exemple décrit dans la demande EP 2 062 941.

Comme autre additif, on peut également citer des cires d'origines animale, végétale ou d'hydrocarbures, en particulier des cires hydrocarbonées à chaîne longue (plus de 30 atomes de carbone). En particulier, on peut citer les cires hydrocarbonées à base de polyéthylène ou également de cire hydrocarbonée obtenue par la synthèse de Fischer Tropsch (telle que la cire Fischer Tropsch commercialisée sous le nom commercial Sasobit® par la société Sasol), de poids moléculaire supérieur à 400 g/mol et inférieur à 6 000 g/mol. De telles cires sont par exemple décrites dans les brevets US 6588974, FR 2 855 523, EP 1 017760, EP 690 102.

Comme autre additif, on peut également introduire un dérivé d'acide gras choisi dans le groupe constitué par les diesters d'acide gras, les éthers d'acide gras, les cires d'amides, les cires de diamide et leurs mélanges.

Comme additif de maniabilité, on peut également introduire une résine naturelle, éventuellement modifiée, d'origine végétale.

La majorité des résines naturelles ou naturelles modifiées d'origine végétale n'ont pas de point de fusion déterminé mais présentent une zone de ramollissement. La résine présente avantageusement un point de ramollissement inférieur à 130°C, encore plus avantageusement inférieur à 120°C et en outre avantageusement supérieur à 65°C.

La résine d'origine végétale est avantageusement choisie dans le groupe constitué par les colophanes naturelles ou naturelles modifiées, les esters de colophane, les savons de colophane, les terpènes, le tall oil, le dammar, les résines accroïdes. La résine d'origine végétale est plus particulièrement une résine de colophane, par exemple le glycérol ester de colophane maléique. On peut par exemple citer les additifs décrits dans les brevets FR 2 945 818, FR 2 965 271.

On peut également citer les additifs décrits dans les brevets EP 2 062 943, FR 2 939 143, FR 2 901 279.

L'autre additif de maniabilité peut ne pas avoir de point de fusion / changement d'état dans la plage de température d'intérêt. Par exemple, on peut introduire un fluxant, également appelé huile de fluxage, à base de matières grasses animales et/ou végétales (huiles et graisses). L'huile de fluxage peut être une huile végétale, un résidu de distillation d'une huile végétale, l'un de ses dérivés tels que sa partie acide gras, un mélange d'acides gras, un produit de transestérification (par un alcanol en C1-C6) tel qu'un ester méthylique de l'huile végétale ou un dérivé de résine alkyde de l'huile végétale. L'huile végétale comprend des chaînes grasses insaturées. De telles huiles sont par exemple décrites dans les brevets FR 2 910 477, EP 900 822, FR 2 721 043, FR 2 891 838.

On pourra également utilisant des fluxants tels que ceux décrits dans les brevets WO2006/070104, WO 2011/151387 et FR16/57180 (demande non encore publiée).

On peut également envisager des additifs diminuant les tensions superficielles à l'interface liant/granulat (meilleure mouillabilité).

On peut par exemple utiliser les additifs décrits dans les demandes de brevet FR 2 883 882, EP 1 716 207, EP 1 915 420.

Des polymères superabsorbants, tels que ceux décrits dans la demande FR 2 950 893, pourraient également être utilisés.

Les composés mentionnés dans la description et les polymères peuvent être d'origine fossile ou biosourcés. Dans ce dernier cas, ils peuvent être, partiellement ou totalement, issus de la biomasse ou obtenus à partir de matières premières renouvelables issues de la biomasse.

### Procédé de préparation

Le produit asphalte, en particulier l'asphalte coulé, selon l'invention pourra être préparé comme un asphalte coulé traditionnel mais à une température de fabrication qui pourra être abaissée, avantageusement d'au moins 20°C, plus avantageusement d'au moins 30°C.

De même, la température de mise en œuvre du produit asphaltique, en particulier de l'asphalte coulé, de l'invention, par rapport à un produit asphaltique de même formulation sans l'additif de l'invention, pourra être abaissée, avantageusement d'au moins 20°C, plus avantageusement d'au moins 30°C.

### Propriétés du produit asphaltique

L'invention permet d'accéder à des produits asphaltiques, en particulier des asphaltes coulés, répondant aux exigences attendues par l'homme de l'art pour ces produits, notamment indentation, mais avec une maniabilité significativement améliorée. Cette maniabilité améliorée permet d'abaisser la température de fabrication et la température de mise en œuvre, que le liant bitumineux soit de type paraffinique ou de type napthénique. Ce gain en maniabilité ne se fait pas au détriment de l'indentation qui reste sensiblement la même.

Pour une même température de mise en œuvre, l'invention permet d'accéder à des produits asphaltiques avec un liant bitumineux paraffinique ou de synthèse ayant les mêmes propriétés de maniabilité qu'un produit asphaltique avec un liant bitumineux naphténique. Cela permet une économie de coûts le liant naphténique étant plus onéreux, et une plus grande facilité de gestion, le liant naphténique étant moins facilement disponible.

L'invention permet également une capacité améliorée à absorber les variations de formulation, souvent liées à la charge, au niveau industriel, sur chantiers en particulier.

### Utilisations du produit asphaltique

Le produit asphaltique selon l'invention peut être utilisé dans toutes ses applications usuelles, en particulier pour la fabrication de revêtement de chaussées, de trottoirs ou autres aménagements urbains, de couches d'étanchéité d'ouvrages et bâtiments.

L'invention a également pour objet l'utilisation d'un polymère thermoplastique selon l'invention, tel que défini précédemment, pour améliorer la dispersion d'une charge minérale dans un liant hydrocarboné d'un produit asphaltique. Avantageusement le liant hydrocarboné est un liant bitumineux paraffinique, un liant de de synthèse ou un liant bitumineux naphténique. Avantageusement le produit asphaltique est un asphalte coulé.

Les exemples qui suivent permettent d'illustrer l'invention.

### Descriptif des figures :

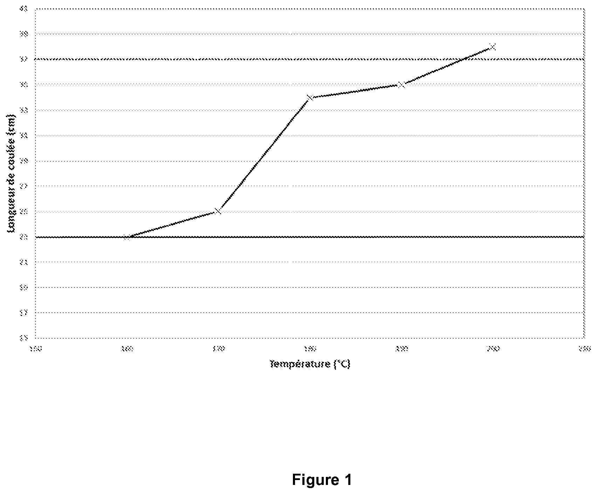

La figure 1 représente l'influence de la température sur les coulées de mastics bitumineux. On a représenté la longueur de coulée (en cm) en fonction de la température (°C), en suivant le test de l'exemple 1, pour le bitume paraffinique comprenant 0,6% en poids, par rapport au poids du liant, de l'additif selon l'invention (x). En référence, on a également indiqué sur ce graphique la longueur de coulée pour le même bitume paraffinique sans additif à 200°C (trait continu horizontal) et la longueur de coulée pour un bitume naphténique sans additif à 200°C (trait discontinu horizontal)

### EXEMPLES

### Exemple 1 : Maniabilité d'un mastic d'asphalte

On a évalué le comportement de trois mastics, deux mastics témoin, un mastic selon l'invention, à l'écoulement, à différentes températures. L'essai consiste à mesurer la longueur d'écoulement des mastics bitumineux sur un plan incliné à 45°. L'évaluation du comportement du mastic à l'écoulement qui en résulte est basée sur l'appréciation de la coulée du mastic (longueur et aspect). La composition des mastics est donnée dans le tableau suivant :

**Tableau 1**

| | | MTem1 | MTem2 | MInv |
|---|---|---|---|---|
| Liant bitumineux | Type | 35/50 (naphténique) | 35/50 (paraffinique) | 35/50 (paraffinique) |
| | Quantité | 25,5g | 25,5g | 25,5g |
| Charge calcaire | Quantité | 100g | 100g | 100g |
| Additif selon l'invention | Quantité | 0 | 0 | 0,6 |

L'additif selon l'invention est un poly(acide ricinoléïque) ayant un indice d'acide de 50 mgKOH/g. Ce produit est commercialisé par la société Oléon sous la dénomination Nouracid CE 80, n°CAS : 68604-47-7.

La teneur en additif selon l'invention est exprimée en pourcentage en poids par rapport au poids du liant bitumineux.

On mesure la longueur de coulée des trois mastics à 200°C :
- MTem1 : 37 cm
- MTem2 : 23 cm
- MInv : 38 cm

Dans tous les cas l'aspect de la coulée est satisfaisant.

On constate que, à 200°C, le témoin MTem1 est beaucoup plus maniable que le témoin MTem2.

A 200°C, le mastic selon l'invention Mlnv est plus maniable que le témoin MTem1 et beaucoup plus maniable que le témoin MTem2.

On a mesuré les longueurs de coulée du mastic MInv pour différentes températures de mise en œuvre : 200°C, 190°C, 180°C, 170°C et 160°C.

Les résultats sont reportés sur la figure 1. A titre de référence, on a également ajouté sur la figure 1 les longueurs de coulées, à 200°C, pour les mastics témoins MTem1 et MTem2.

On constate que l'ajout de l'additif au mastic selon l'invention Mlnv permet un gain en température d'environ 40°C : en comparaison avec MTem2 mis en œuvre à 200°C, une même longueur de coulée est obtenue pour un mastic selon l'invention Mlnv mis en œuvre a une température très significativement plus faible, à savoir à 160°C.

A 200°C, l'ajout de l'additif au mastic selon l'invention Mlnv permet d'atteindre les performances obtenues avec un bitume naphténique, MTem2.

### Exemple 2 : Maniabilité d'un asphalte coulé

La maniabilité de deux asphaltes coulés témoins et d'un asphalte selon l'invention ont été comparés, par deux méthodes usuelles : l'extension dimensionnelle au seau et la mesure de puissance du malaxeur

L'extension dimensionnelle au seau est un essai permettant de mesurer l'étalement naturel par son propre poids d'un volume d'asphalte connu, et donc d'identifier sa maniabilité à une température de mise en œuvre.

On utilise un seau en bois pour asphalte et bitume de chez Jacquenet-Malin (9L - 30cm de diamètre - Hauteur 32cm) (protocole décrit lors de la présentation congrès de l'AIA, Paris, septembre 2015, M. FAUCON-DUMONT et M. LOUP).

L'essai de maniabilité par mesure de puissance au malaxeur consiste à mesurer dans un malaxeur (ici un FREUNDEL GZM30) le produit asphaltique la puissance nécessaire au dispositif de malaxage pour pétrir l'asphalte.

Cette mesure est effectuée à une température donnée, ici 200°C, et à une vitesse de rotation de malaxage donnée, ici 6 tours/min. Cette mesure s'effectue en watts.

Les formules testées sont les suivantes :

**Tableau 2**

| Matériaux | ATem1 | ATem2 | AInv |
|---|---|---|---|
| Gravillon 2/4 | 32,1% | 32,1% | 32,1% |
| Sable 0/4 | 32,0% | 32,0% | 32,0% |
| Filler calcaire | 27,5% | 27,5% | 27,5% |
| Bitume 35/50 paraffinique | - | 8,0% | 8,0% |
| Bitume 35/50 Naphténique | 8,0% | - | - |
| Cire | 0,4% | 0,4% | 0,4% |
| Additif de l'invention | 0% | 0% | 0,6% du bitume |

L'additif de l'invention est un poly(acide ricinoléïque) ayant un indice d'acide de 50 mgKOH/g. Ce produit est commercialisé par la société Oléon sous la dénomination Nouracid CE 80, n°CAS : 68604-47-7.

Les résultats de maniabilité sont les suivants :

**Tableau 3**

| | AT1 | AT2 | Formule selon l'invention | Spécifications requises |
|---|---|---|---|---|
| Extension dimensionnelle au seau en cm à 200°C | 72 cm | 61 cm | 74 cm | >68cm |
| Maniabilité au malaxage en watts à 200°C | 5W | 7W | 4,5 W | <6W |

### Indentation

Les essais d'indentations sont réalisés selon la norme NF EN 12697-21 (septembre 2012). Cette norme décrit une méthode de mesure de l'indentation d'un asphalte coulé lorsqu'il est soumis à la pénétration d'un poinçon normalisé cylindrique avec embout plat circulaire, à des valeurs données de température et de charge et pour un temps d'application fixé.

| | |
|---|---|
| Le poinçon a un diamètre de | (25,2+/-0,1) mm pour une surface de 500mm² |
| | (11,3+/-0,1) mm pour une surface de 100mm² |
| | (6,35+/-0,1) mm pour une surface de 31,7mm² |

Les échantillons sont coulés dans des moules à la température de fabrication du produit asphaltique et laissé refroidir à l'air libre.

Les échantillons sont ensuite immergés pendant au moins 60 min dans le bain thermostatique régulé à la température d'essai. Ensuite, l'éprouvette est placée sous l'appareil de mesure. Plusieurs essais sont effectués sur la même éprouvette ; le poinçon n'est pas placé à moins de 30 mm du bord et à moins de 30 mm de l'emplacement de l'essai précédent.

Les conditions d'essai sont conformes au tableau suivant :

**Tableau 4**

| Paramètre | Type | | | |
|---|---|---|---|---|
| | Essai W | Essai A | Essai B | Essai C |
| Température | 25°C, 35°C, 45°C | 25°C | 40°C | 25°C, 35°C, 45°C |
| Surface de poinçon | 31,7 MM² | 500 mm² | 500 mm² | 100 mm² |
| Charge appliquée | 311 +/- 2 N | 515 +/- 3 N | 515 +/- 3 N | 515 +/- 3 N |
| Durée d'application de la charge | 70s | 6min | 31min | 31min |
| Mesure entre | 10s et 70s | 1 min et 6 min | 1 min et 31 min | 1 min et 31 min |

Dans le cas présent, on met en œuvre l'essai B. Les résultats sont les suivants :

**Tableau 5**

| | ATem1 | ATem2 | AInv | Spécifications requises |
|---|---|---|---|---|
| Indentation en 1/10mm selon la norme NF EN 12697-21 | 22 | 6 | 21 | 20 - 50 |

En comparant AInv avec ATem1, on constate l'asphalte selon l'invention a une maniabilité réduite sans détériorer l'indentation, qui est sensiblement identique pour ATem1 et Alnv.

### Exemple 3 : influence de la température pour un liant bitumineux de type naphténique

On a évalué le comportement à l'écoulement de mastics à base de liant bitumineux napthénique comprenant de 0% à 2% en poids d'un additif selon l'invention à différentes températures. L'essai consiste à mesurer la longueur d'écoulement des mastics bitumineux sur un plan incliné à 45°. L'évaluation du comportement du mastic à l'écoulement qui en résulte est basée sur l'appréciation de la coulée du mastic (longueur et aspect).

Les résultats sont donnés dans le tableau suivant :

**Tableau 6**

| | Témoins | | | Mastics selon l'invention | | | | | | |
|---|---|---|---|---|---|---|---|---|---|---|
| | Sans additif | | | 0,6% additif | | | 1% additif | | | 2% additif |
| Liant bitumineux | 20% | 20% | 20% | 20% | 20% | 20% | 20% | 20% | 20% | 20% |
| Additif de l'invention | 0,0% | 0,0% | 0,0% | 0,6% | 0,6% | 0,6% | 1,0% | 1,0% | 1,0% | 2,0% |
| Charge calcaire | 80% | 80% | 80% | 80% | 80% | 80% | 80% | 80% | 80% | 80% |
| Température (°C) | 200 | 180 | 160 | 200 | 180 | 160 | 200 | 180 | 160 | 160 |
| Longueur de coulée (cm) | 30 | 20 | 12 | 36 | 26 | 20 | 40 | 34 | 21 | 26 |

Le liant bitumineux est un liant naphténique de type 35/40 commercialisé par Nynas sous la dénomination Nybit 40.

L'additif selon l'invention est un poly(acide ricinoléïque) ayant un indice d'acide de 50 mgKOH/g. Ce produit est commercialisé par la société Oléon sous la dénomination Nouracid CE 80, n°CAS : 68604-47-7.

Les teneurs en liant bitumineux et en charge calcaire sont exprimées en poids par rapport au poids total liant bitumineux + charge calcaire. La teneur en additif selon l'invention est exprimée en pourcentage en poids par rapport au poids du liant bitumineux.

Dans tous les cas l'aspect de la coulée est satisfaisant.

Pour une même température de mise en œuvre de 200°C, l'ajout d'un additif selon l'invention permet d'améliorer la maniabilité.

Pour les mastics témoins, on constate que la diminution de la température impacte négativement la maniabilité. Un mastic comprenant 20% en poids de liant bitumineux Nybit 40 doit être chauffé à 200°C pour assurer une maniabilité considérée comme étant très satisfaisante.

L'ajout d'un additif selon l'invention permet de réduire la température de mise en œuvre tout en assurant une maniabilité satisfaisante, vue au travers des longueurs de coulée à 180°C ou 160°C comparables à celle obtenue pour le mastic témoin à 200°C.

On constate que l'ajout de l'additif au mastic selon l'invention permet un gain en température d'au moins 20°C.

### Exemple 4 : influence de la nature de l'additif

On a évalué le comportement à l'écoulement de mastics à base de liant bitumineux napthénique comprenant de 1% ou 1,2% en poids d'un additif selon l'invention à 200°C , la nature de l'additif variant. L'essai consiste à mesurer la longueur d'écoulement des mastics bitumineux sur un plan incliné à 45°. L'évaluation du comportement du mastic à l'écoulement qui en résulte est basée sur l'appréciation de la coulée du mastic (longueur et aspect).

Les résultats sont donnés dans le tableau suivant :

**Tableau 7**

| | Témoin | Mastics selon l'invention | | |
|---|---|---|---|---|
| | Sans additif | Avec % additif | | |
| Liant bitumineux | 20% | 20% | 20% | 20% |
| Nouracid CE80 | 0,0% | 1,0% | - | - |
| Soslperse 8000 | 0,0% | - | 1,2% | - |
| Soslperse 21000 | 0,0% | - | - | 1,2% |
| Charge calcaire | 80% | 80% | 80% | 80% |
| Température (°C) | 200 | 200 | 200 | 200 |
| Longueur de coulée (cm) | 30 | 40 | 40 | 40 |

Le liant bitumineux est un liant naphténique de type 35/40 commercialisé par Nynas sous la dénomination Nybit 40.

Nouracid CE80 est un additif selon l'invention, ici un poly(acide ricinoléïque) ayant un indice d'acide de 50 mgKOH/g. Ce produit est commercialisé par la société Oléon sous la dénomination Nouracid CE 80, n°CAS : 68604-47-7.

Soslperse 8000 est un additif selon l'invention. Ce produit est commercialisé par la société Lubrizol.

Soslperse 21000 est un additif selon l'invention. Ce produit est commercialisé par la société Lubrizol.

Les teneurs en liant bitumineux et en charge calcaire sont exprimées en poids par rapport au poids total liant bitumineux + charge calcaire. La teneur en additif selon l'invention est exprimée en pourcentage en poids par rapport au poids du liant bitumineux.

Dans tous les cas l'aspect de la coulée est satisfaisant.

Ces trois additifs permettent chacun d'améliorer la maniabilité du mastic.

### Exemple 5 : influence de la teneur en charge minérale

On a évalué le comportement à l'écoulement de mastics à base de liant bitumineux napthénique comprenant de 0% ou 1,2% en poids d'un additif selon l'invention à 200°C pour une teneur en charge minérale croissante. L'essai consiste à mesurer la longueur d'écoulement des mastics bitumineux sur un plan incliné à 45°. L'évaluation du comportement du mastic à l'écoulement qui en résulte est basée sur l'appréciation de la coulée du mastic (longueur et aspect).

Les résultats sont donnés dans le tableau suivant :

**Tableau 8**

| | Témoins | | Mastic selon l'invention | | |
|---|---|---|---|---|---|
| | Sans additif | | 1,2% additif | | |
| Liant bitumineux | 20% | 18% | 18% | | |
| Nouracid CE80 | 0,0% | 0,0% | 1,2% | | |
| | | | | | |
| | | | | | |
| Charge calcaire | 80% | 82% | 82% | | |
| Température (°C) | 200 | 200 | 200 | | |
| Longueur de coulée (cm) | 30 | 20 | 32 | | |

Le liant bitumineux est un liant naphténique de type 35/40 commercialisé par Nynas sous la dénomination Nybit 40.

Nouracid CE80 est un additif selon l'invention, ici un poly(acide ricinoléïque) ayant un indice d'acide de 50 mgKOH/g. Ce produit est commercialisé par la société Oléon sous la dénomination Nouracid CE 80, n°CAS : 68604-47-7.

Les teneurs en liant bitumineux et en charge calcaire sont exprimées en poids par rapport au poids total liant bitumineux + charge calcaire. La teneur en additif selon l'invention est exprimée en pourcentage en poids par rapport au poids du liant bitumineux.

Dans tous les cas l'aspect de la coulée est satisfaisant.

Pour les mastics témoins, on constate que la diminution de la teneur en liant bitumineux impacte négativement la maniabilité.

L'ajout d'un additif selon l'invention permet de réduire la teneur en liant bitumineux tout en assurant une maniabilité très satisfaisante, vue au travers des longueurs de coulée supérieures à celle obtenue pour le mastic témoin à 80% en poids de liant bitumineux.

L'ajout d'un additif selon l'invention permet donc en chantier de rattraper des variations de formulation, laissant plus de souplesse.

## Revendications

1. Produit asphaltique comprenant un liant hydrocarboné bitumineux ou de synthèse et au moins une charge minérale, **caractérisé en ce qu'**il comprend également 0,02 à 5 % en poids, de préférence 0,2 à 1,5% en poids, par rapport au poids dudit liant bitumineux, d'un polymère thermoplastique compatible avec le liant hydrocarboné, ledit polymère étant choisi parmi :
- Un polymère ayant au moins une terminaison acide carboxylique, le polymère étant un polyester, un polyamide, un poly(ester-amide), un polyéther fonctionnalisé en bout de chaîne acide carboxylique, ou un polydiène fonctionnalisé en bout de chaîne acide carboxylique lorsque ledit polymère thermoplastique comprend plus d'une fonction acide carboxylique, au moins 20 atomes de carbone séparent ces fonctions acide carboxylique ;
- Un polymère ayant au moins une fonction phosphate ou phosphonate ;
- Et leurs mélanges.

2. Produit asphaltique selon la revendication 1, caractérisé en ce le liant hydrocarboné est un liant bitumineux naturel paraffinique ou un liant de synthèse, préférablement un liant bitumineux naturel naphténique.

3. Produit asphaltique selon l'une quelconque des revendications précédentes, **caractérisé en ce que** le polymère thermoplastique a un indice d'acide inférieur à 100 mgKOH/g, avantageusement inférieur à 50mgKOH/g.

4. Produit asphaltique selon l'une quelconque des revendications précédentes, **caractérisé en ce que** le polymère thermoplastique a une masse moléculaire en poids d'au moins 500 g/mol, avantageusement de 500 g/mol à 200 000 g/mol.

5. Produit asphaltique selon l'une quelconque des revendications précédentes, **caractérisé en ce que** le polymère thermoplastique est un polyester, un polyamide ou un poly(ester-amide), de préférence choisi parmi le poly(acide ricinoléique) ou le poly(12-hydroxystéarique).

6. Produit asphaltique selon l'une quelconque des revendications précédentes, **caractérisé en ce que** le polymère est obtenu par polymérisation d'au moins un hydroxyacide de formule (I) :
HO-C(O)-R-CR'(OH)-R" (I)
où
R est une chaîne hydrocarbonée, aliphatique, en C8-C20, saturée ou insaturée, éventuellement ramifiée, comprenant éventuellement un ou des atomes d'oxygène, comprenant une chaine principale linéaire d'au moins 8 atomes de carbone ;
R', R" représentent chacun, indépendamment l'un de l'autre, H ou une chaîne hydrocarbonée, aliphatique, en C1-C10.

7. Produit asphaltique selon l'une quelconque des revendications 1 à 5, **caractérisé en ce que** le polymère est obtenu par polymérisation d'au moins un hydroxyacide de formule (I), tel que défini à la revendication précédente, en présence d'au moins un diacide carboxylique de formule (III) :
HO-C(O)-R2-C(O)-H (III)
où
R2 est une chaîne hydrocarbonée aliphatique en C1-C60, saturée ou insaturée, éventuellement ramifiée, comprenant éventuellement un ou des atomes d'oxygène, ou un groupement aromatique.

8. Produit asphaltique selon l'une quelconque des revendications 1 à 5, **caractérisé en ce que** le polymère est obtenu par polycondensation d'un diacide choisi parmi l'acide sébacique, l'acide azélaique, l'acide adipique, l'acide glutarique, l'acide succinique, l'acide maléique, l'acide itaconique, et leurs mélanges et d'un diol choisi parmi le dodecanediol, le decanediol, l'hexane diol, le butanediol, le propanediol, les polybutadiènes hydroxytéléchéliques, les polytetrahydrofurane hydroxytéléchéliques, les polypropylene glycol hydroxytéléchéliques et leurs mélanges.

9. Produit asphaltique selon l'une quelconque des revendications 1 à 5, **caractérisé en ce que** le polymère est obtenu par polycondensation d'un diacide choisi parmi l'acide sébacique, l'acide azélaique, l'acide adipique, l'acide glutarique, l'acide succinique, l'acide maléique, l'acide itaconique, et leurs mélanges et d'un diol, d'une diamine ou d'un mélange d'un diol et d'une diamine, ledit diol étant choisi parmi le dodecanediol, le decanediol, l'hexane diol, le butanediol, le propanediol, les polybutadiènes hydroxytéléchéliques, les polytetrahydrofurane hydroxytéléchéliques, les polypropylene glycol hydroxytéléchéliques et leurs mélanges, ladite diamine étant tétraméthylène diamine, l'hexaméthylène diamine, ou la décanediamine et leurs mélanges.

10. Produit asphaltique selon l'une quelconque des revendications 1 à 4, **caractérisé en ce que** le polymère est obtenu par condensation d'un polyéther mono ou dihydroxytéléchélique et d'un polyacide en excès, ou par ouverture de cycle d'une lactone, d'un lactide ou d'un anhydride cyclique avec un polyéther mono ou dihydroxytéléchélique.

11. Produit asphaltique selon la revendication précédente, **caractérisé en ce que** le polyéther est le polytétrahydrofurane ou le polypropylene glycol.

12. Produit asphaltique selon l'une quelconque des revendications 1 à 4, **caractérisé en ce que** le polymère est obtenu par condensation d'un polydiène mono ou dihydroxytéléchélique et d'un polyacide en excès, ou par ouverture de cycle d'une lactone, d'un lactide ou d'un anhydride cyclique avec un polydiène mono ou dihydroxytéléchélique.

13. Produit asphaltique selon la revendication précédente, **caractérisé en ce que** le polydiène est le polybutadiène ou le polyisoprène ainsi que les copolymères d'isoprène-butadiène.

14. Produit asphaltique selon l'une quelconque des revendications 1 à 4, **caractérisé en ce que** le polymère est de type ester-phosphate.

15. Produit asphaltique selon l'une quelconque des revendications précédentes, **caractérisé en ce que** la charge minérale est du carbonate de calcium.

16. Utilisation d'un produit asphaltique selon l'une quelconque des revendications précédentes, pour la fabrication de revêtement de chaussées, de trottoirs ou autres aménagements urbains, de couches d'étanchéité d'ouvrages et bâtiments.

17. Utilisation d'un polymère thermoplastique, compatible avec le bitume, tel que défini à l'une quelconque des revendications 1 à 15, pour améliorer la dispersion d'une charge minérale dans un liant hydrocarboné d'un produit asphaltique, ledit liant hydrocarboné étant préférablement un liant bitumineux paraffinique, un liant de synthèse ou un liant bitumineux naphténique.

## Patentansprüche

1. Asphaltprodukt, das ein bituminöses oder synthetisches Kohlenwasserstoff-Bindemittel und mindestens einen mineralischen Füllstoff umfasst, **dadurch gekennzeichnet, dass** es auf das Gewicht des bituminösen Bindemittels bezogen ebenfalls 0,02 bis 5 Gewichts-%, vorzugsweise 0,2 bis 1,5 Gewichts-%, eines mit dem Kohlenwasserstoff-Bindemittel kompatiblen thermoplastischen Polymers umfasst, wobei das Polymer ausgewählt ist aus:
- einem Polymer, das mindestens ein Carbonsäure-Ende aufweist, wobei es sich bei dem Polymer um einen Polyester, ein Polyamid, ein Poly(esteramid), einen am Carbonsäure-Kettenende funktionalisierten Polyether, oder ein am Carbonsäure-Kettenende funktionalisiertes Polydien handelt, wenn das thermoplastische Polymer mehr als eine Carbonsäure-Funktion umfasst, wobei mindestens 20 Kohlenstoffatome diese Carbonsäure-Funktionen trennen;
- einem Polymer, das mindestens eine Phosphat- oder Phosphonat-Funktion aufweist;
- und deren Mischungen.

2. Asphaltprodukt nach Anspruch 1, **dadurch gekennzeichnet, dass** es sich bei dem Kohlenwasserstoff-Bindemittel um ein natürliches paraffinisches bituminöses Bindemittel oder ein synthetisches Bindemittel, vorzugsweise ein natürliches naphthenisches bituminöses Bindemittel handelt.

3. Asphaltprodukt nach einem der vorstehenden Ansprüche, **dadurch gekennzeichnet, dass** das thermoplastische Polymer eine Säurezahl von kleiner als 100 mgKOH/g, vorteilhafterweise kleiner als 50 mgKOH/g, aufweist.

4. Asphaltprodukt nach einem der vorstehenden Ansprüche, **dadurch gekennzeichnet, dass** das thermoplastische Polymer eine gewichtsbezogene Molekülmasse von mindestens 500 g/mol, vorteilhafterweise von 500 g/mol bis 200.000 g/mol, aufweist.

5. Asphaltprodukt nach einem der vorstehenden Ansprüche, **dadurch gekennzeichnet, dass** es sich bei dem thermoplastischen Polymer um einen Polyester, ein Polyamid oder ein Poly(esteramid) handelt, vorzugsweise ausgewählt aus Poly(ricinolsäure) oder Poly(12-hydroxystearinsäure).

6. Asphaltprodukt nach einem der vorstehenden Ansprüche, **dadurch gekennzeichnet, dass** das Polymer durch Polymerisation mindestens einer Hydroxysäure der Formel (I):
HO-C(O)-R-CR'(OH)-R" (I)
erhalten wird, wobei
R eine gesättigte oder ungesättigte, gegebenenfalls verzweigte, gegebenenfalls ein oder mehrere Sauerstoffatome umfassende aliphatische C8-C20-Kohlenwasserstoffkette ist, die eine lineare Hauptkette mit mindestens 8 Kohlenstoffatomen umfasst;
R', R" jeweils unabhängig voneinander H oder eine aliphatische C1-C10-Kohlenwasserstoffkette darstellen.

7. Asphaltprodukt nach einem der Ansprüche 1 bis 5, **dadurch gekennzeichnet, dass** das Polymer durch Polymerisation mindestens einer Hydroxysäure der Formel (I), wie im vorstehenden Anspruch definiert, in Gegenwart mindestens einer Dicarbonsäure der Formel (III):
HO-C(O)-R2-C(O)-H (III)
erhalten wird, wobei
R2 eine gesättigte oder ungesättigte, gegebenenfalls verzweigte aliphatische C1-C60-Kohlenwasserstoffkette, die gegebenenfalls ein oder mehrere Sauerstoffatome umfasst, oder eine aromatische Gruppe ist.

8. Asphaltprodukt nach einem der Ansprüche 1 bis 5, **dadurch gekennzeichnet, dass** das Polymer durch Polykondensation einer Disäure, ausgewählt aus Sebacinsäure, Azelainsäure, Adipinsäure, Glutarsäure, Bernsteinsäure, Maleinsäure, Itaconsäure und deren Mischungen, und eines Diols, ausgewählt aus Dodecandiol, Decandiol, Hexandiol, Butandiol, Propandiol, hydroxytelechelen Polybutadienen, hydroxytelechelen Polytetrahydrofuran, hydroxytelechelen Polypropylenglykol und deren Mischungen erhalten wird.

9. Asphaltprodukt nach einem der Ansprüche 1 bis 5, **dadurch gekennzeichnet, dass** das Polymer durch Polykondensation einer Disäure, ausgewählt aus Sebacinsäure, Azelainsäure, Adipinsäure, Glutarsäure, Bernsteinsäure, Maleinsäure, Itaconsäure und deren Mischungen, und eines Diols, eines Diamins oder einer Mischung eines Diols und eines Diamins erhalten wird, wobei das Diol ausgewählt ist aus Dodecandiol, Decandiol, Hexandiol, Butandiol, Propandiol, hydroxytelechelen Polybutadienen, hydroxytelechelen Polytetrahydrofuran, hydroxytelechelen Polypropylenglykol und deren Mischungen, wobei es sich bei dem Diamin um Tetramethylendiamin, Hexamethylendiamin oder Decandiamin und deren Mischungen handelt.

10. Asphaltprodukt nach einem der Ansprüche 1 bis 4, **dadurch gekennzeichnet, dass** das Polymer durch Kondensation eines mono- oder dihydroxytelechelen Polyethers und einer überschüssigen Polysäure, oder durch Ringöffnung eines Lactons, eines Lactids oder eines cyclischen Anhydrids mit einem mono- oder dihydroxytelechelen Polyether erhalten wird.

11. Asphaltprodukt nach dem vorstehenden Anspruch, **dadurch gekennzeichnet, dass** es sich bei dem Polyether um Polytetrahydrofuran oder Polypropylenglykol handelt.

12. Asphaltprodukt nach einem der Ansprüche 1 bis 4, **dadurch gekennzeichnet, dass** das Polymer durch Kondensation eines mono- oder dihydroxytelechelen Polydiens und einer überschüssigen Polysäure, oder durch Ringöffnung eines Lactons, eines Lactids oder eines cyclischen Anhydrids mit einem mono- oder dihydroxytelechelen Polydien erhalten wird.

13. Asphaltprodukt nach dem vorstehenden Anspruch, **dadurch gekennzeichnet, dass** es sich bei dem Polydien um Polybutadien oder Polyisopren sowie Isopren-Butadien-Copolymere handelt.

14. Asphaltprodukt nach einem der Ansprüche 1 bis 4, **dadurch gekennzeichnet, dass** das Polymer vom Ester-Phosphat-Typ ist.

15. Asphaltprodukt nach einem der vorstehenden Ansprüche, **dadurch gekennzeichnet, dass** es sich bei dem mineralischen Füllstoff um Calciumcarbonat handelt.

16. Verwendung eines Asphaltprodukts nach einem der vorstehenden Ansprüche zur Herstellung eines Belags für Fahrbahnen, Gehwege oder andere städtische Bebauungen, von Abdichtungsschichten für Bauwerke und Gebäude.

17. Verwendung eines thermoplastischen Polymers, das mit Bitumen kompatibel ist, wie in einem der Ansprüche 1 bis 15 definiert, um die Dispersion eines mineralischen Füllstoffs in einem Kohlenwasserstoff-Bindemittel eines Asphaltprodukts zu verbessern, wobei es sich bei dem Kohlenwasserstoff-Bindemittel vorzugsweise um ein paraffinisches bituminöses Bindemittel, ein synthetisches Bindemittel oder ein naphthenisches bituminöses Bindemittel handelt.

## Claims

1. Asphalt product comprising a synthetic or bituminous hydrocarbon binder and at least one inorganic filler, **characterised in that** it also comprises 0.02 to 5 wt. %, preferably 0.2 to 1.5 wt. % relative to the weight of said bituminous binder, of a thermoplastic polymer compatible with the hydrocarbon binder, said polymer being selected from:
- A polymer having at least one terminal carboxylic acid, the polymer being a polyester, a polyamide, a poly(ester-amide), a polyether functionalised at the carboxylic acid chain end, or a polydiene functionalised at the carboxylic acid chain end when said thermoplastic polymer comprises more than one carboxylic acid function, with at least 20 carbon atoms separating the carboxylic acid functions;
- A polymer having at least one phosphate or phosphonate function;
- And mixtures thereof.

2. Asphalt product according to claim 1, **characterised in that** the hydrocarbon binder is a paraffinic natural bituminous binder or a synthetic binder, preferably a naphthenic natural bituminous binder.

3. Asphalt product according to any one of the preceding claims, **characterised in that** the thermoplastic polymer has an acid index less than 100 mgKOH/g, advantageously less than 50mgKOH/g.

4. Asphalt product according to any one of the preceding claims, **characterised in that** the thermoplastic polymer has a molecular mass by weight of at least 500 g/mol, advantageously from 500 g/mol to 200,000 g/mol.

5. Asphalt product according to any one of preceding claims, **characterised in that** the thermoplastic polymer is a polyester, a polyamide or a poly(ester-amide), preferably selected from poly(ricinoleic acid) or poly(12- hydroxystearic).

6. Asphalt product according to any one of the preceding claims, **characterised in that** the polymer is obtained by polymerisation of at least one hydroxyacid of formula (I):
HO-C(O)-R-CR'(OH)-R" (I)
where
R is a saturated or unsaturated, optionally branched, C8-C20 aliphatic hydrocarbon chain, optionally comprising one or more oxygen atoms, comprising a linear main chain of at least 8 carbon atoms;
R', R" each represent, independently of one another, H or a C1-C10 aliphatic hydrocarbon chain.

7. Asphalt product according to any one of claims 1 to 5, **characterised in that** the polymer is obtained by polymerisation of at least one hydroxyacid of formula (I), such as defined in the preceding claim, in the presence of at least one carboxylic diacid of formula (III):
HO-C(O)-R2-C(O)-H (III)
where
R2 is a saturated or unsaturated, optionally branched, C1-C60 aliphatic hydrocarbon chain, optionally comprising one or more oxygen atoms, or an aromatic group.

8. Asphalt product according to any one of claims 1 to 5, **characterised in that** the polymer is obtained by polycondensation of a diacid selected from sebacic acid, azelaic acid, adipic acid, glutaric acid, succinic acid, maleic acid, itaconic acid, and mixtures thereof and of a diol selected from dodecanediol, decanediol, hexane diol, butanediol, propanediol, hydroxytelechelic polybutadienes, hydroxytelechelic polytetrahydrofurans, hydroxytelechelic polypropylene glycols and mixtures thereof.

9. Asphalt product according to any one of claims 1 to 5, **characterised in that** the polymer is obtained by polycondensation of a diacide selected from sebacic acid, azelaic acid, adipic acid, glutaric acid, succinic acid, maleic acid, itaconic acid, and mixtures thereof and of a diol, of a diamine or of a mixture of a diol and of a diamine, said diol being selected from dodecanediol, decanediol, hexane diol, butanediol, propanediol, hydroxytelechelic polybutadienes, hydroxytelechelic polytetrahydrofurans, hydroxytelechelic polypropylene glycols and mixtures thereof, said diamine being tetramethylene diamine, hexamethylene diamine, or decanediamine and mixtures thereof.

10. Asphalt product according to any one of claims 1 to 4, **characterised in that** the polymer is obtained by condensation of a mono or dihydroxytelechelic polyether and of a polyacid in excess, or by ring opening of a lactone, of a lactide or of a cyclic anhydride with a mono or dihydroxytelechelic polyether.

11. Asphalt product according to the preceding claim, **characterised in that** the polyether is polytetrahydrofuran or polypropylene glycol.

12. Asphalt product according to any one of claims 1 to 4, **characterised in that** the polymer is obtained by condensation of a mono or dihydroxytelechelic polydiene and of a polyacid in excess, or by ring opening of a lactone, of a lactide or of a cyclic anhydride with a mono or dihydroxytelechelic polydiene.

13. Asphalt product according to the preceding claim, **characterised in that** the polydiene is polybutadiene or polyisoprene as well as isoprene-butadiene copolymers.

14. Asphalt product according to any one of claims 1 to 4, **characterised in that** the polymer is of the ester-phosphate type.

15. Asphalt product according to any one of the preceding claims, **characterised in that** the inorganic filler is calcium carbonate.

16. Use of an asphalt product according to any one of the preceding claims, for the manufacture of surfaces of roads, pavements or other urban amenities, of sealing coats of structures and buildings.

17. Use of a thermoplastic polymer, compatible with bitumen, such as defined in any one of claims 1 to 15, to improve the dispersion of an inorganic filler in a hydrocarbon binder of an asphalt product, said hydrocarbon binder preferably being a paraffinic bituminous binder, a synthetic binder or a naphthenic bituminous binder.
